Europäisches Patentamt

(19) European Patent Office

Office européen des brevets

(11) Publication number: 0 106 533
A2

## (12) EUROPEAN PATENT APPLICATION

(21) Application number: 83305349.9

(22) Date of filing: 13.09.83

(51) Int. Cl.³: G 11 B 5/27
G 11 B 5/58, G 11 B 5/105

(30) Priority: 13.09.82 US 417690

(43) Date of publication of application:
25.04.84 Bulletin 84/17

(84) Designated Contracting States:
BE DE FR GB NL

(71) Applicant: APPLIED MAGNETICS MAGNETIC HEAD
DIVISION CORPORATION
75 Robin Hill Road
Goleta California 93117(US)

(72) Inventor: Schuler, Heinz
132 Dana Point
Ventura California 93003(US)

(74) Representative: Baillie, Iain Cameron et al,
c/o Ladas & Parry Isartorplatz 5
D-8000 München 2(DE)

(54) Magnetic head assembly having improved read/write characteristics for a floppy disc.

(57) A magnetic head assembly having a read and write magnetic transducing assembly (390) with a gap (406) for recording a track of data having a first width on a moving magnetic media (160) and an erase magnetic transducing assembly (392) located adjacent said read and write magnetic transducing assembly (390). The erase magnetic transducing assembly includes a pair of erase cores (394, 396) each having two core portions (412, 414) which each terminate in end sections positioned with one end section of each core portion adjacent each other to define an erase gap (426) and with the other end sections of each core portion terminating in end edges which are spaced from each other to define an opening therebetween. The pair of erase cores (394, 396) are positioned in spaced, substantially parallel relationship to each other with a predetermined distance therebetween which is less than said first width. The erase gaps (426) are located on each side of the recording gap to erase a portion of the edge of each recorded track of data having a first width to produce a recorded track of data on a said magnetic media having a track width substantially equal to said predetermined distance. An erase coil (424) encloses two spaced parallel aligned other end sections of one core portions (414, 416) of each erase core (394, 396) with the end edges thereof extending slightly beyond the erase coil (424). A back bar (420) having a first end (430) and a second end (432), is positioned across the opening with said first end (430) contiguous each of said end edges of the two spaced parallel aligned other end sections (414, 416). The second end (432) is contiguous the other two spaced parallel aligned other end sections of the other core portion of each erase core to form a closed low reluctance path.

Fig. 12

Croydon Printing Company Ltd.

./...

Fig. 13

MAGNETIC HEAD ASSEMBLY HAVING IMPROVED
READ/WRITE CHARACTERISTICS FOR A
FLOPPY DISC

BACKGROUND OF THE INVENTION

1.  Field of the Invention

This invention relates to a magnetic head assembly of the type held in operative relation with one or both sides of a rotatable flexible planar magnetic recording media and more specifically relates to a magnetic head assembly having a read/write transducer and an adjacent erase transducer which erases on either side of magnetic track form by the read/write transducer when writing.  Such an erase is referred to as a "tunnel erase".

2.  Description of the Prior Art

Apparatus for maintaining two magnetic transducers in operative relation with both sides of a rotatable flexible planar meagnetic recording media is known in the art.  Exemplary apparatuses are disclosed in IBM Technical Disclosure Manual Volume 18, No. 7 dated December 1975 at pages 2246 and 2247, and No. 12 dated May 1976 at pages 4112 to 4114 and in U.S. Patent No. 4,151,573 to Tandon et al.

A read/write and tunnel erase magnetic head assembly is disclosed in U.S. Patents 3,846,840 and 4,110,804.

In the magnetic head assembly disclosed in U.S. Patent 3,846,840, the core portions defining the erase coil and an opening therebetween and the erase coil encloses only a part of the end sections of the core portion defining the erase core.  The flux path for the erase core includes air which bridges the opening.

-2-

U.S. Patent 4,110,804 shows an improvement of U.S. Patent 3,846,840 by using a bridging bar to close a portion of the opening. One end of the bridge bar is contiguous the erase coil to define an air gap between the end portions of the core portions partially enclosed by the erase coil and the bridging bar. The so provided air gap is considered important to balance out the reluctance of the two magnetic circuits defined by two parallel erase cores.

SUMMARY OF THE INVENTION

Briefly and in general terms, the invention provides a magnetic head assembly with a read and write magnetic transducing assembly having a gap for recording a track of data having a first width on a magnetic media and an erase magnetic transducing assembly located adjacent to the read and write magnetic transducing assembly such that as the said magnetic media is transported by the erase transducer assembly, a track of data recorded by the read and write transducer assembly having a first width passes thereby. The erase magnetic transducing assembly including a pair of erase cores each having two core portions which each terminate in end sections positioned with one end section of each core portion adjacent each other to define an erase gap and with the other end sections of each core portion terminating in end edges which are spaced from each other to define an opening therebetween. The pair of erase cores are positioned in spaced opposed substantially parallel relationship to each other with a predetermined distance therebetween which is less than the aforementioned first width and having the other end sections of each pair of erase cores positioned in spaced parallel alignment with each other and with said erase gaps of said pair of erase cores positioned in spaced alignment to each other with one of the erase gaps located on each side of the recording gap. Each of the gaps may be positioned relative to the magnetic media to erase a portion of the edge of each recorded track of data having a first width to produce a recorded track of data on the magnetic media having a track width substantially equal to the predetermined distance.

The erase magnetic transducing assembly also includes an erase coil enclosing two spaced parallel aligned other end sections of one core position of each erase core with the end edges thereof extending slightly beyond the erase coil and a back bar of magnetically permeable material having a first end and a second end. The back bar is positioned across the opening with the first end contiguous each of the end edges of the two spaced parallel aligned other end sections which extend slightly beyond the erase coil and with the second end contiguous the other two spaced parallel aligned other end sections of the other core portion of each erase core to form a closed low reluctance path defined by the two end sections of the two core portions enclosed by said erase coil, the back bar and the other two end sections of the other two core portions for magnetic flux produced in the core portions of each erase core by the erase coil.

By utilizing the teachings of the present invention, an improved magnetic head assembly having an erase magnetic transducing assembly which provides a closed, low reluctance path for magnetic flux is obtained. This results in an improved recorded track of data on a magnetic media having a predetermined width which is less than the full width of the data originally recorded, utilizing the principle of tunnel erasing wherein the erase signal is of sufficient magnitude to clearly erase prior recorded data which results in improved operating characteristics.

A further advantage of the present invention is that a magnesium-zinc-ceramic slider can be utilized

-4-

which together with the construction of the transducer subassembly results in a transducing subassembly which has lower capacitance and a response time which is substantially improved over the known prior art transducing subassemblies.

## BRIEF DESCRIPTION OF THE DRAWINGS

These and other objects and advantages of the invention, together with its various features and advantages, can be more easily understood from the following more detailed description of the preferred embodiment taken in conjunction with the accompanying drawing in which:

Figure 1 is a perspective view of a carriage-loading arm assembly positioned relative to a diskette having a double sided floppy disc;

Figure 2 is a perspective pictorial view illustrating the position of a first transducer mounted on a differential torsion spring support means relative to the axes of a disc which axes are radial, normal and circumferential to a double sided floppy disc;

Figure 3 is an exploded view showing the various components of a transducer/differential torsion spring assembly mounted within a support housing;

Figure 4 is a pictorial representation partially in cross section, illustrating the relationship between a first transducer supported by a differential torsion spring support means and a second transducer supported by gimballed support means;

Figure 5 is an isometric view of the first transducer which is adapted to be supported by the differential torsion spring as illustrated in Figure 3;

Figure 6 is a top planar view of a differential torsion spring support means having a central support member for mounting a first transducer to the first end of a carriage;

-5-

Figure 7 is a sectional view of a differential torsion spring support means taken along section lines 7-7 of Figure 6;

Figure 8 is a top perspective view of a carriage loading arm having a transducing subassembly mounted thereon;

Figure 9 is a back perspective view of the arm and transducing head assembly of Figure 8;

Figures 10a and 10b are a top perspective view of a rear perspective view of a transducing subassembly;

Figure 11 is a perspective view of a carriage loading arm assembly having a single transducing subassembly mounted on an arm and a resilient support member located on the movable arm of a carriage loading assembly;

Figure 12 is a front plan view, partially in cross-section, of a magnetic head assembly having a read and write magnetic transducing assembly and an erase transducing assembly;

Figure 13 is a perspective view of a magnetic head assembly showing the core structure of a read and write magnetic transducing assembly and an erase transducing assembly adapted for use in the tunnel erase recording system;

Figure 14 is a pictorial representation of the flux path showing that the erase coil has a substantially closed low reluctance path for conducting magnetic flux; and

Figure 15 is a graph amplitude plus a function of time showing the rise time characteristics of a transducing head assembly using the teachings of this invention.

DESCRIPTION OF THE PREFERRED EMBODIMENT

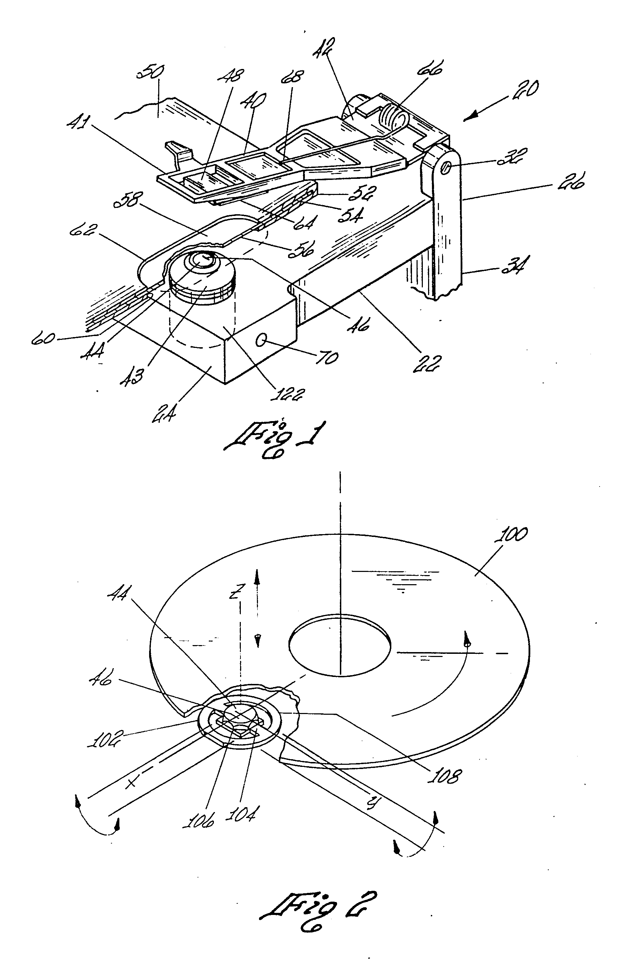

Figure 1 shows the apparatus for maintaining two magnetic transducers in operative relation with both sides of a rotatable flexible planar recording media generally by arrow 20. In the preferred embodiment, the apparatus is in the form of a carriage-loading arm mechanism which includes a carriage 22 having a first end 24 and a second end 26. A loading arm 40 has a first end 41 and a second end 42 with the second end 42 being pivotally connected to the second end 26 of the carriage 22 through a pin member 32.

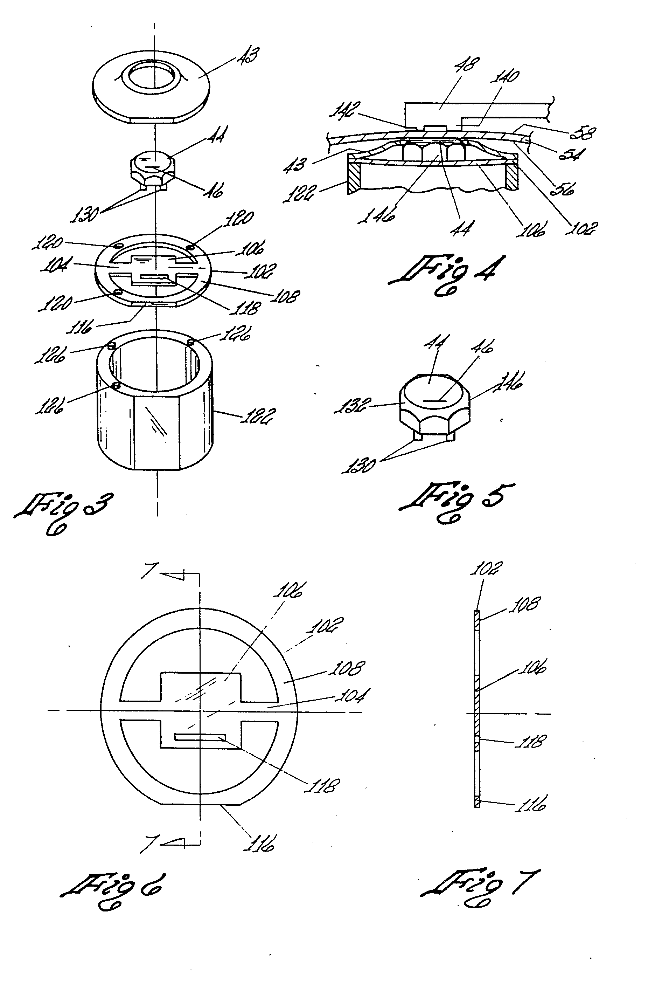

A first transducer 44 is coupled to the first end 24 of the carriage 22 through a differential torsion spring support means, shown as spring 102 in Figure 2. The first transducer 44 is enclosed by a ramp shield 43 which is adapted to receive and deflect the edge of a diskette 50 during insertion therof between the carriage 22 and the loading arm 40. The diskette 50 includes an envelope 52 and a double sided floppy disc 54 having a first side 56 and a second side 58. The envelope 52 includes opening 60 adjacent one side 56 and a second opening 62 adjacent the other side 58. The opening 60 provides means for the first transducer 44 to be positioned in different data transfer positions relative to and in engagement with the one side 56 of the media 54.

A second transducer 48 is coupled to the second end 41 of the loading arm 40 through a gimbal support means 64. The loading arm 40 is adapted to position the second transducer 48 in different data transfer positions relative to and in engagement with the other side 58 of the media 54 through opening 62. The gimbal support means 64 is adapted to support the second transducer 48 in a fully compliant relationship with low flexure stiffness about three axes with respect to the disc 54 which are radial, normal and circumferential to the disc.

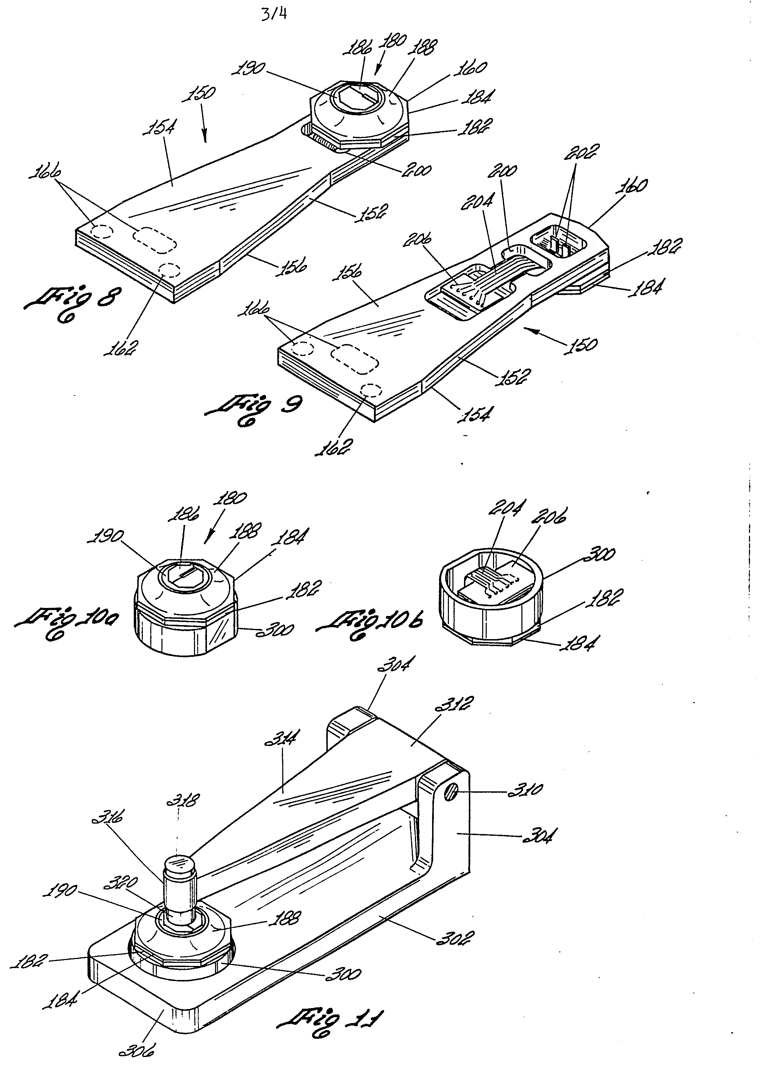

The first transducer 44 and the ramp shield 43 are supported by a transducer housing shown by dash lines 122 in Figure 1 and which is illustrated in greater detail in Figure 3. The housing is held in the first end 24 of the carriage 22 by means of a holding fastener 70.

Figure 2 illustrates in greater detail the relationship between the first transducer 44 relative to a rotatable flexible planar magnetic recording media or disc 100. In the preferred embodiment, the first transducer 44 is mounted on a differential torsion spring support means 102 such that the transducing gap 46 is circumferential with respect to the disc 100. The differential torsion spring support means 102 is adapted to support the first transducer 44 against one side of the media 100 in a semi-compliant relationship with high flexure stiffness about two axes, one of which is radial with respect to the media 100, that axis being shown as axis "X", and the other of which is normal to the media 100 and which is shown in Figure 2 as axis "Z". In addition, the differential torsion spring support means 102 supports the transducer 44 in a fully compliant relationship with low flexure stiffness about a third axis which is circumferential with respect to the media 100, that axis being shown as axis "Y".

As illustrated in Figure 2, the differential torsion spring support means 102 has an annular shaped outer ring 108, a central support member 104 which extends through the diameter of the annular shaped outer ring 108 and a flat planar base 106 which is located intermediate the central support member 104. The planar base 106 is adapted to receive and support the first transducer 44. As illustrated in Figure 2, the first transducer and planar base 106 can be deflected in the "Z" axis due to the resiliency of the central support member 104. The resiliency in the "Z" axis is characterized as being semi-compliant with high flexure stiffness in an axis which is normal with respect to the media.

-8-

The movement of the differential torsion spring central support member 104 in the "X" direction depends upon the resiliency characteristic of the central support member 104 in the "X" direction and this is characterized likewise as being a semi-compliant relationship with high flexure stiffness about an axis which is radial with respect to the media.

The transducer 44, the planar base 106 and the central support member 104 is adapted to be rotatable around the "Y" axis. This is characterized as being a fully compliant relationship with a low flexure stiffness about a third axis which is circumferential with respect to the media. This axis is shown as axis "Y" in Figure 2.

Referring again to Figure 1, means are operatively coupled to the carriage 22 and the loading arm 42 which, in the preferred embodiment, is a loading spring 66 having an elongated arm 68, which functions to position the second transducer 48 into contiguous engagement with the other side 58 of the disc 54. Thus, the floppy disc 54 is positioned in close operative relationship between the first transducer 44 and the second transducer 48. The first transducer 44 and second transducer 48 are responsive to the disc 54 being rotated therebetween such that variations in the flexure of the disc 54 along the "X" axis which is radial to the disc 54 and along the "Z" axis which is normal to the disc 54, are compensated primarily mainly by movement of the second transducer 48 against its gimbal support means 64 and partially by movement of the first transducer 44 against its differential torsion spring support means 102. In addition, variations in flexure of the disc 54 along the third or "Y" axis circumferential to the disc 54, are compensated by equal movements of each transducer 44 and 48 against its support means to maintain contiguous engagement between each sides of the media 56 and 58 relative to transducers 44 and 48.

Figure 3 illustrates the various components which are utilized to mount the first transducer 44 and the differential torsion spring support means 102 within the first end 24 of the carriage 22. A housing 122 has a plurality of alignment pins 126 extending from one end thereof which are adapted to receive, align and support the differential torsion spring support means 102.

The differential torsion spring support means 102 includes a plurality of apertures 120 which are adapted to receive and be aligned by pins 126 extending from housing 122. The planar base 106 of the differential torsion spring support means 108 has an elongated slot 118 formed therein which is adapted to receive tabs 130 which extend from the under surface of transducer 44 which is opposed to the surface forming the transducing surface which is adapted to continuously engage the media. The ramp shield 43 is adapted to be mounted on the extended pins 126 and is secured to the housing 122 by an epoxy adhesive. The edge of transducer 44 is spaced from the inner surface of the aperture in the ramp shield 43 to permit independent movement of the transducer 44 in the radial, normal and circumferential axes.

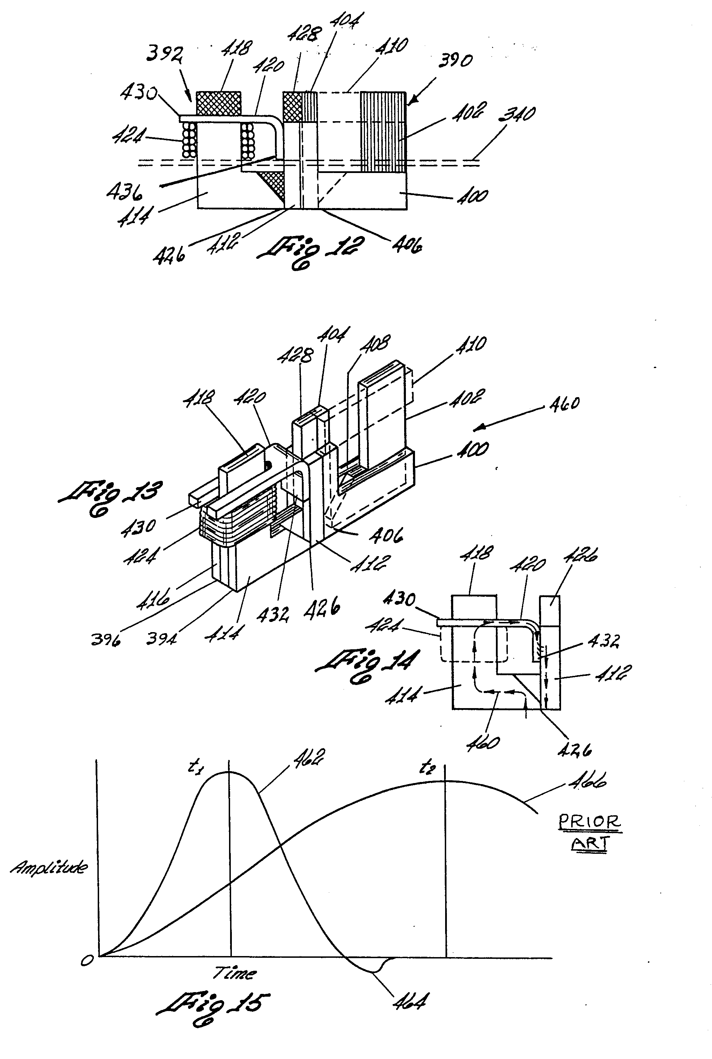

Figure 4 shows in greater detail the relationship between the first transducer 44, the second transducer 48 and the disc 54. The housing 122 supports the differential torsion spring support means 102 with the central support member 104 extending therebetween which receives and supports the first transducer 44. The ramp shield 43 is illustrated to be assembled relative to the differential torsion spring support means 102 and the first transducer 44 such that the first transducer surface slightly extends or protrudes beyond the edge of the ramp shield 43 to insure intimate contact by the slightly protruding transducer 44 with the disc 54.

The second transducer 48 is adapted to be loaded against the first transducer 44 in order to position the media in operative relationship therebetween. When the second transducer 48 is urged into contiguous engagement with the other side 58 of the media 54, the transducing gap 142 in the second transducer 48 is positioned in transducing relationship with side 58. A slider 140 is adapted to engage and hold the media 54 in a substantially flat rigid relationship against the concave surface of the protruding first transducer 44. When the second transducer 48 is positioned in contiguous engagement with the side 58 of the disc 54, the second transducer 48 urges disc 52 and side 56 thereof into contiguous engagement with the transducer 44. A loading force is exerted against the surface of head 44 along the "Z" axis which then causes the central support member 104 of the differential torsion spring support means 102 to deform slightly in the "Z" direction which is essentially a semi-compliant relationship having a high flexure stiffness.

As the disc 54 is rotated about its axis which moves the sides 56 and 58 past the first transducer 44 and the second transducer 48, respectively, portion of the disc located between the transducers 44 and 48 is held in a somewhat rigid manner to afford some stiffness to the media to permit the transducing action to occur between both sides of the media. Variations in flexure of the media along the "Z" axis which is the axis normal to the surface of disc 54 are compensated primarily by movements of the first transducer 48 along the "Z" axis and partially by movement of transducer 44 due to the flexure of central support member 104 to permit slight movements of first transducer 44 along the "Z" axis.

Figure 5 illustrates one embodiment of a first transducer which is adapted to be utilized in practicing this invention. The transducer 44 has a transducing gap 46 located in a plano-concave surface formed in transducer 44. Rounded edges 132 extend from the edge of the plano-concave surface forming the transducer surface which provides means for the edge of the transducer 44 to terminate underneath the edge of the diskette ramp shield 43 as illustrated in Figure 4. Tabs 130, which are adapted to pass through elongated slot 118 illustrated in Figures 3 and 6, are adapted to have electrical conductors connected thereto for the conduction of electric signals to and from the transducer 44 to electronics located remotely from the carriage-loading arm assembly.

Figures 6 and 7 illustrate in greater detail the specific construction of one embodiment of a differential torsion spring support which can be utilized in practicing the invention. In the preferred embodiment, the differential torsion spring 102 has an annular ring 108 which has a flat edge 116 formed on one portion thereof which is adapted to correspond to a flat portion formed on the housing 122. The planar base 106 has a geometrical width and length which is approximately equal to the radius of the annular member 108. The elongated slot 118 extends substantially parallel to the central support member 104.

In the preferred embodiment, the differential torsion support spring is formed of type 304 stainless steel, is approximately .004 inches in thickness and approximately .035 inches in width. The spring stiffness along the "X" axis is a 6300 ft/lbs per inch; along the "Y" axis is approximately 68,000 ft/lbs per inch and along the "Z" axis approximately 82 ft/lbs per inch. About the roll axis the stiffness is approximately .128 inches-ft/lbs per radian; about the pitch axis 1.73 inches-ft/lbs per radian and about the yaw axis is approximately 132 inch-ft/lbs per radian. In the preferred embodiment, natural resonant frequencies (undamped) along the "Z" axis are approximately 1060

-12-

hertz; along the "Y" axis 30,400 hertz; along the "X" axis 9,270 hertz; about the roll axis 750 hertz, about the pitch axis 2,770 hertz and about the yaw axis 14,500 hertz.

In the preferred embodiment, the first transducer is adapted to be utilized in a 96 track per inch double sided floppy disc installation. From the standpoint of diskette wear, the loading between the second transducer relative to the first transducer is approximately 14 ± 1 gram which reduces the transducer head-to-media wear.

In the preferred embodiment, a loading force having a minimum of 15 grams is desirable, but a higher loading force, say in the order of 17 grams, may be used.

The deflection of the transducer along the "X" axis, which is normal to the media, is approximately .0012 inches after loading of the second transducer thereagainst. In the preferred embodiment, the transducer surface protrudes beyond the map load shield approximately .0008 inches to about .0019 inches.

The carriage-loading arm assembly has utility in double sided floppy disc applications. The design of the carriage-loading arm assembly is such that it is interchangeable with such assemblies utilized by a number of manufacturers in double sided diskette drive assemblies. In addition, the carriage-loading arm assembly can be utilized with higher density floppy disc recording systems by utilizing a transducer which has higher track per inch recording and reproducing capability and higher density applications.

In the preferred embodiment, the carriage-loading arm assembly includes two transducers, at least one of which is operatively coupled to the end of at least one of the carriage and loading arm through a differential torsion spring support means. In the preferred embodiment disclosed herein, a gimbal support means is

-13-

utilized to operatively couple a transducer to the
loading arm. However, it is envisioned that such
transducer could be operatively coupled to the loading
arm by support means other than a gimbal support means.
For example, it is envisioned that a differential
torsion spring support means could likewise be utilized
in lieu of a gimbal support means to operatively couple
a transducer to the end of a loading arm.

Further, depending upon the design and application
of a carriage-loading arm assembly or its associated
disc drive, a differential torsion spring support means
could be utilized as the means for operatively coupling
the one transducer to the end of the loading arm and a
gimbal support means utilized for operatively coupling
the other transducer to the end of the carriage. It is
acknowledged, however, that the present design and
applications utilize a carriage-loading arm assembly of
the preferred embodiment.

Figure 8 illustrates an alternate embodiment of a
loading arm 150 of a carriage-loading arm assembly having
a second transducer 180 operatively coupled to the
second end 160 thereof. The loading arm has a central
portion 152, an upper surface 154 and a lower surface
156. The first end 162 of the loading arm 150 is adapted
to have a mounting slot and mounting openings, shown by
dashed openings 162 formed therein, to facilitate mounting
of the loading arm 150 to a carriage. The second end 160
of the loading arm 150 has the second transducer 180
operatively coupled thereto through a differential
torsion spring support means 182. A thin housing 184
supports the differential torsion spring support means
182 and ramp shield 188. The ramp shield 188 supports
the second transducer 180 in a spaced relationship
relative thereto. The ramp shield 188 includes side
walls which define an opening to permit the second
transducer 180 to extend therethrough and protrude

-14-

slightly beyond the ramp shield 188 permitting the slider surface 186 to engage the selected surface of a disc. The second transducer 180 is spaced from the sidewalls of the ramp shield 188 as shown by spacing 190. The loading arm central portion 156 has an upper slot 200 formed therein which is adapted to permit the flexible electrical conductors 204, shown in Figure 9, to pass from the second transducer 180 therethrough to the lower side 156 of the loading arm 150.

Figure 9 depicts the slot 200, the flexible electrical conductors 204 and a terminal board 206 which is adapted to be electrically connected to an output circuit (not shown). A pair of extended tabs 202 are adapted to have the flexible electrical conductors 204 mounted thereto. The pair of extended tabs 202 provide the necessary mechanical and electrical connecting member for the thin housing 184 embodiment.

Figure 10a illustrates the transducing subassembly 180 of Figures 8 and 9 in an alternate embodiment wherein the transducing subassembly is mounted on an extended housing base 300. The extended housing base 300 is adapted to be mounted on the carriage and is adapted to enclose a terminal board 206. As illustrated in Figure 10b, the flexible electrical conductors 204 are electrically connected to a terminal board 204 which is located within the interior of the extended base housing.

Figure 11 illustrates the transducing assembly 180 of Figure 10a and 10b in an apparatus for maintaining at least one magnetic transducer in operative relation with at least one side of a rotatable flexible planar magnetic recording media. As illustrated in Figure 11, a carriage 302 has a first end 306 and a second end 304. The first transducer assembly 180 is coupled to the first end 306 of the carriage 302 through a differential torsion spring support means 182. The carriage 302 is adapted to position the first transducer 180 said first transducer in different data transfer positions relative to and in engagement with a selected side of the disc which serves as the recording media. The differential torsion spring support means 182 is adapted to support the first transducer 180 against the selected side of a media in a semi-compliant relationship with high flexure stiffness about two axes, one of which is radial with respect to the media and the other of which is normal to the media and in a fully compliant relationship with low flexure stiffness about a third axis which is circumferential with respect to the media.

A loading arm 314 has a first end 312 and a second end 316 with the first end 312 being pivotally connected through a pin 310 to the second end 304 of the carriage. The loading arm 314 is positioned relative to the other side of the media and is adapted to have its second end 316 movable toward and away from the other side of the media. In the embodiment illustrated in Figure 11, the support means operatively coupled to the second end 316 is a flexible resilient means 320 having an elongated cylindrical support 318 which is adapted to be inserted into the annular shaped second end 316 of the loading arm 314. The resilient support means is adapted to be positioned contiguous the other side of the media and is fully compliant with low flexure stiffness about all three of the axes with respect to the media. The ramp shield 188 is positioned at the first end 306 of the carriage assembly and is adapted to enclose the first transducer to permit independent movement of the first transducer along axes which are normal, radial and circumferential to the media. As illustrated in Figures 10a, 10b and 11, the ramp shield 188 includes side walls defining an opening which is greater than the geometrical dimension of the first transducer 180 so as to permit the transducer 180 to extend centrally through and spaced from the sidewalls, shown as spacing 190, and to protrude slightly beyond the ramp shield 188 to engage the surface of the media.

The construction of the transducing assembly illustrated in Figures 10a, 10b and 11 is of particularly unique construction from two aspects; namely, (1) the transducer 180 is free to move against the differential torsion spring support means without sliding against the side walls of the ramp shield 188 which would otherwise retart or seriously change the operational characteristics of the head-to-disc interaction; and (2) the electrical properties of the transducing assembly is significantly improved due to the absence of physical contact between the side walls of the ramp shield 188 and the transducer 180. The major improved operating characteristics of the transducing assembly is in the substantial reduction of the capacitance between the transducer 180 and the ramp shield 188. The reduction in capacitance becomes significant at the operating frequencies associated in the double density floppy disc applications. The improved operating characteristics are more fully described in connection with the description of Figure 15.

The first transducer 180 illustrated in Figures 10a, 10b and 11 may include a magnetic head assembly in the form of the improved magnetic head assembly illustrated in Figures 12, 13 and 14. The magnetic head assembly includes a read and write magnetic transducing assembly 390 having pole pieces 402 and 404 which define a gap 406 for recording a track of data having a first width on a magnetic media. An erase magnetic transducing assembly 392 is located adjacent the read and write magnetic transducing assembly 390 and is adapted to have the magnetic media transport a recorded track of data having a first width therepast. The erase magnetic transducing assembly 392 has a pair of erase cores 394

-17-

and 396 which is preferably formed of a ferrite material. Each erase core has two core portions of which 412 and 414 of erase core 394 is typical. The core portion 416 for the second erase core 396 is likewise shown in Figure 13. The erase gaps are both referred to as 426. Each of the core portions terminate in end sections positioned with one end section of each core portion adjacent each other to define an erase gap 426 and with the other end sections of each core portion terminating in end edges which are spaced from each other to define an opening therebetween. The pair of erase cores 394 and 396 are positioned in spaced opposed substantially parallel relationship to each other and with a predetermined distance therebetween which is less than said first width. The other end sections of each pair of erase cores 394 and 396 are positioned in spaced parallel alignment with each other and with the erase gaps of each pair of erase cores 394 and 396 positioned in spaced alignment to each other with one of the erase gaps located on each side of the recording gap 406.

Each of the gaps 426 are adapted to be positioned relative to the magnetic media to erase a portion of the edge of each recorded track of data having a first width to produce a final track of data on a magnetic media having a track width substantially equal to the predetermined distance between the two erase cores 394 and 396.

An erase coil 424 encloses two spaced parallel aligned other end sections of one core portions 414 and 416 of each erase core 394 and 396 with the end edges thereof extending slightly beyond the erase coil 424. An "L" shaped back bar of magnetically permeable material 420 having a first end 430 and a second end 432 is positioned across the opening with the first end 430 contiguous each of the end edges of the two spaced parallel aligned other end sections of core sections 424 and 416 which extend slightly beyond the erase coil 424. The second end is contiguous the other two spaced parallel aligned other end sections of the other core portion of each erase core, core portion 412 being typical, to form a closed low reluctance path defined by the two end sections of the two core portions 414 and 416 enclosed by the erase coil 424, the back bar 420 and the other two end sections of the other two core portions, of which 412 is typical, for the magnetic flux produced in the core portions of each erase core 394 and 396 by the erase coil 424. In the preferred embodiment, the back bar 420 is formed of a high mu material and a mu of about 80 being preferred.

In the read and write magnetic transducing assembly 390, the gap 406 is located central of an insulating spacer illustrated by spacer 400. The back bar for completing the magnetic circuit for the read and write magnetic transducing circuit is illustrated by dashed lines 410. The spacing between the two erase cores 394 and 396 is obtained by an insulating member 418. The recording gap 406 is physically located forward of the two erase gaps 426 such that a media transported in the direction shown by arrow 460 first has a track of data having a first width recorded on a magnetic media. The magnetic media is transported from the recording gap 406 such that the recorded track of data having a first width is then moved to the two erase gaps 426. The erase gaps 426 are then physically located on each side of the recording gap 406 and are adapted to be positioned relative to the moving magnetic media to erase a portion of the edge of each recorded track of data having a first width to produce a recorded track of data on the magnetic media having a track width substantially equal to the predetermined distance.

Figure 14 illustrates pictorially that the magnetic flux shown by arrow 160 traverses a closed flux path defined by the core portions 412 and 414, for erase

-19-

core 394, and through the back bar 420 which is contiguous the end of core portion 414. The erase coil 424 is positioned to completely enclose the end of core portion 412 as well as the end of core portion 416. The result is that a higher density erase flux is produced at erase gap 426.

Figure 15 is a waveform of the amplitude of an electrical signal, produced by a magnetic head assembly illustrated in Figures 12, 13 and 14, mounted in a transducer assembly illustrated in Figures 10a, 10b or 11 compared to prior art magnetic head assemblies. The curve labeled 462 illustrates that the electrical signal produced by the transducer subassembly has a rise time $t_1$ and falls slightly below the axis for a short period of time as illustrated by the short deflection 464. The prior art transducer assemblies having the transducer integral with the ramp shield, as is typical in Tandon, et al, United States Patent No. 4,151,573, has a curve shown by curve 466 having a rise time $t_2$. Thus, the rise time characteristics of the improved magnetic transducing assembly permits operations at higher operating frequencies which enables use of the improved magnetic transducer at higher media densities.

-20-

CLAIMS

1. A magnetic head assembly having a read and write magnetic transducing assembly having a gap for recording a track of data having a first width on a magnetic media; and an erase magnetic transducing assembly located adjacent said read and write magnetic transducing assembly and adapted to have a said magnetic media transport a said recorded track of data having a first width therepast, and characterized in that said erase magnetic transducing assembly includes a pair of erase cores each having two core portions which each terminate in end sections positioned with one end section of each core portion adjacent each other to define an erase gap and with the other end sections of each core portion terminating in end edges which are spaced from each other to define an opening therebetween, said pair of erase cores being positioned in spaced opposed substantially parallel relationship to each other and with a predetermined distance therebetween which is less than said first width and having the other end sections of each pair of erase cores positioned in spaced parallel alignment with each other and with said erase gaps of said pair of erase cores positioned in spaced alignment to each other with one of the erase gaps located on each side of the recording gap and with each of the gaps adapted to be positioned relative to a said magnetic media to erase a portion of the edge of each recorded track of data having a first width to produce a recorded track of data on a said magnetic media having a track width substantially equal to said predetermined distance; an erase coil enclosing two spaced parallel aligned other end sections of one core portions of each erase core with the end edges thereof extending slightly beyond the erase coil; and a back bar of magnetically permeable material having a first end and a second end, ·said back bar being positioned across said opening with said first end contiguous each of said end edges of the two spaced parallel aligned other end sections which extend slightly beyond said erase coil and with said second end contiguous the other two spaced parallel aligned other end sections of the other core portion of each erase core to form a closed low reluctance path defined by the two end sections of the two core portions enclosed by said erase coil, the back bar and the other two end sections of the other two core portions for magnetic flux produced in the core portions of each erase core by said erase coil.

2. The magnetic head assembly of claim 1 wherein the back bar is formed into an "L" shaped and has its second end bifurcated to form a slot therein.

3. The magnetic head assembly of claim 2 wherein the space between the pair of spaced parallel

-22-

erase cores has a ceramic insulator having a width substantially equal to the track width of recorded data on a said media transported past the erase transducing assembly.

4. The magnetic head assembly of claim 3 wherein the length of the ceramic spacer positioned between the pair of erase coils extends through the slot formed by the bifurcated end of the back bar.

5. The magnetic head assembly of claim 2 wherein the back bar is formed of a high mu material.

6. The magnetic head assembly of claim 5 wherein the material has a mu of about 80.

7. The magnetic head assembly of claim 6 wherein the core portions are formed of ferrite.

8. A carriage-loading arm assembly for maintaining two magnetic transducers in operative relation with both sides of a double sided floppy disc comprising first and second transducers operatively coupled to a carriage-loading arm assembly with said first transducer operatively connected to one end of a carriage through a differential torsion spring support means and said second transducer coupled to one end of the loading arm through a second differential torsion spring support means, said carriage is adapted to position said first transducer in different data transfer positions relative to and in engagement with one side of a said disc, said differential torsion spring support means being adapted to support said

0106533

-23-

first transducer against the one side of a said disc in a semi-compliant relationship with high flexure stiffness about two axes, one of which is radial with respect to a said disc and the other of which is normal to a said disc and in a fully compliant relationship with low flexure stiffness about a third axis which is circumferential with respect to a said disc and said loading arm is adapted to position said second transducer in different data transfer positions relative to and in engagement with the other side of said disc, said second differential torsion spring support means being adapted to support said second transducer against the other side of a said disc in a semi-compliant relationship with high flexure stiffness about two axes, one of which is radial with respect to a said disc and the other of which is normal to a said disc and in a fully compliant relationship with low flexure stiffness about a third axis which is circumferential with respect to a said disc; means operatively coupled to said carriage and said loading arm for moving said loading arm having said second transducer mounted thereon toward the other side of a said disc to position said second transducer into contiguous engagement with the other side of a said disc and to urge a said disc into contiguous engagement with the first transducer positioning a said disc in close operative relationship therebetween enabling said first transducer and said second transducer to be responsive to a said disc being rotated therebetween such that the variations in flexure thereof along axes which are radial and normal to a said disc are compensated primarily by movements of the first and second transducers against its respective differential torsion spring support means.

9. The carriage-loading arm assembly of claim 8 further comprising a ramp shield enclosing the first transducer and including side walls defining an opening to permit the first transducer to slightly protrude therethrough and be spaced from the side walls and into engagement with one side of a said disc and to permit independent movement of the first transducer along the axes which are normal, radial and circumferential to the disc.

10. The carriage-loading arm assembly of claim 8 wherein the differential torsion spring support means comprises: an annular shaped member; a central support member which extends across the diameter of the annular shaped member; and a base plate located intermediate the central support member and having a spaced elongated slot which is parallel to the central support member formed therein.

Fig 1

Fig 2

Fig 3

Fig 4

Fig 5

Fig 6

Fig 7

0106533

3/4

Fig 8

Fig 9

Fig 10a

Fig 10b

Fig 11

0106533

4/4

Fig 12

Fig 13

Fig 14

Fig 15

PRIOR ART

Amplitude

Time